# EUROPÄISCHE PATENTSCHRIFT

(11) **EP 0 939 243 B1**
(45) Veröffentlichungstag und Bekanntmachung des Hinweises auf die Patenterteilung: **18.08.2004**
(21) Anmeldenummer: 98119111.7
(22) Anmeldetag: 09.10.1998
(51) Int. Cl.: F16F 13/26

(54) **Hydraulisch dämpfendes Lager**
Hydraulically-damped support
Support à amortissement hydraulique

(30) Priorität: 25.02.1998 DE 19807868
(43) Veröffentlichungstag der Anmeldung: 01.09.1999
(73) Patentinhaber: Carl Freudenberg KG, 69469 Weinheim (DE)
(72) Erfinder: Simuttis, Arnold Dr., 69469 Weinheim (DE); Rudolph, Axel, 64342 Seeheim/Jugenheim (DE); Winkler, Gerold, 69488 Birkenau (DE)

(56) Entgegenhaltungen:
- EP-A- 0 547 287
- EP-A- 0 821 181
- EP-A- 0 840 035
- FR-A- 2 755 489
- PATENT ABSTRACTS OF JAPAN vol. 1996, no. 10, 31. Oktober 1996 (1996-10-31) & JP 08 156610 A (NIPPONDENSO CO LTD), 18. Juni 1996 (1996-06-18)
- PATENT ABSTRACTS OF JAPAN vol. 008, no. 230 (M-333), 23. Oktober 1984 (1984-10-23) & JP 59 110931 A (TOYODA GOSEI KK), 27. Juni 1984 (1984-06-27)

## Beschreibung

### Beschreibung für folgende Vertragsstaaten : DE, GB, IT

### Technisches Gebiet

Die Erfindung betrifft ein hydraulisch dämpfendes Lager mit einem Arbeitsraum und einem Ausgleichsraum, wobei zwischen dem Arbeitsraum und dem Ausgleichsraum eine Trennwand angeordnet ist, umfassend zumindest eine Durchtrittsöffnung zur Dämpfung tieffrequenter, großamplitudiger Schwingungen und eine in einer Ausnehmung in Richtung der eingeleiteten Schwingungen hin- und herbewegbare Membran zur Isolierung hochfrequenter, kleinamplitudiger Schwingungen sowie eine durch einen Dichtkörper verschließbare Durchbrechung, die durch ein Stellelement einer Stellvorrichtung in Offenstellung bringbar ist.

### Stand der Technik

Ein solches Lager ist aus der EP 0 547 287 A1 bekannt. Das vorbekannt Lager ist als Hydrolager ausgebildet, wobei die zentral innerhalb der Trennwand angeordnete Durchbrechung durch einen stopfenartigen Wulst verschließbar ist.

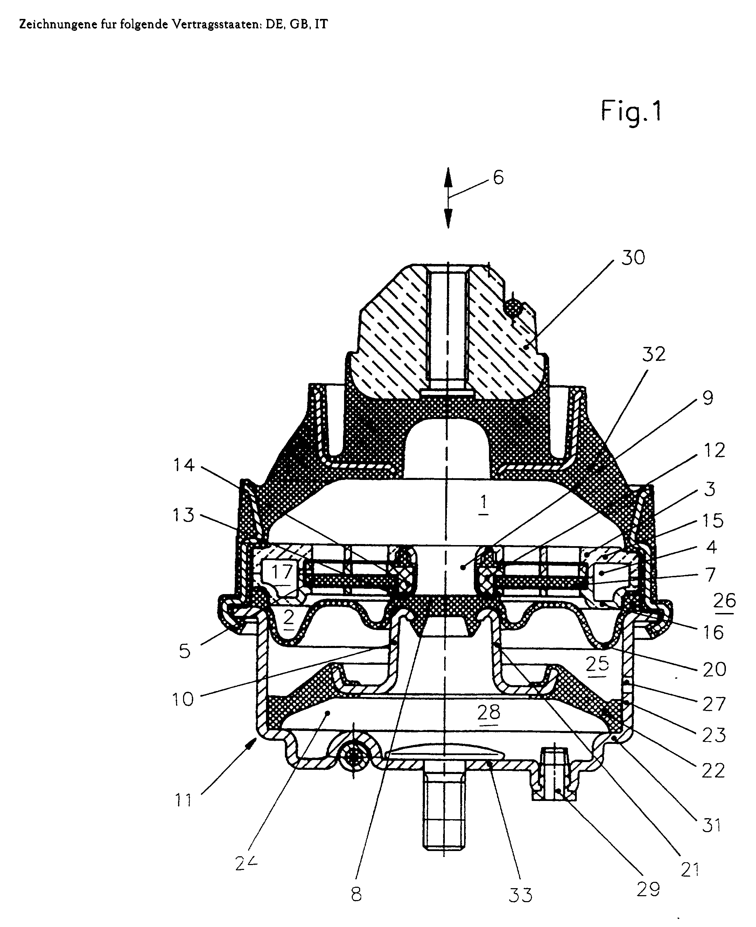

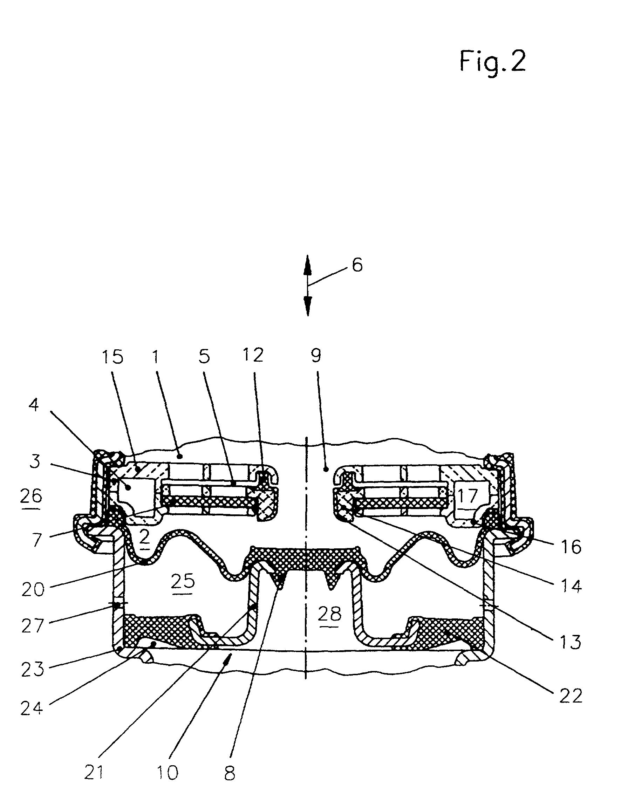

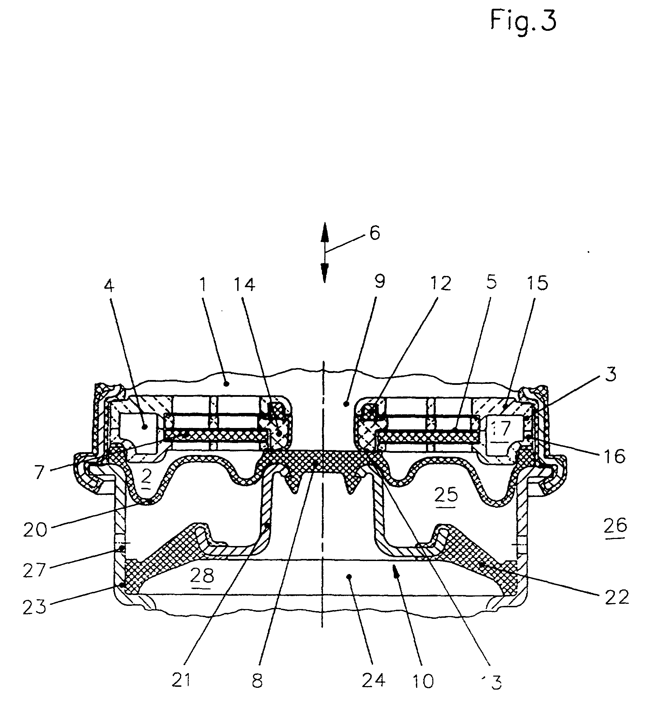

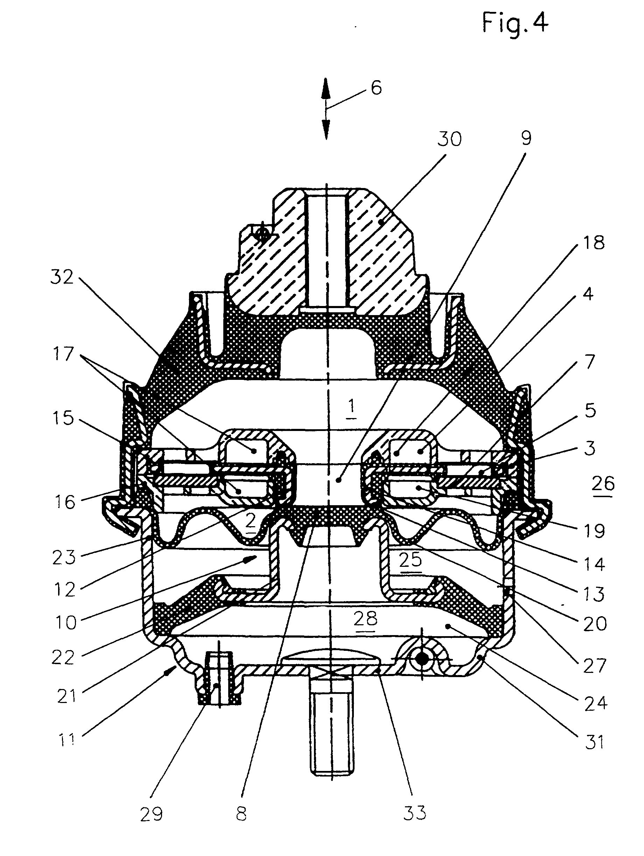

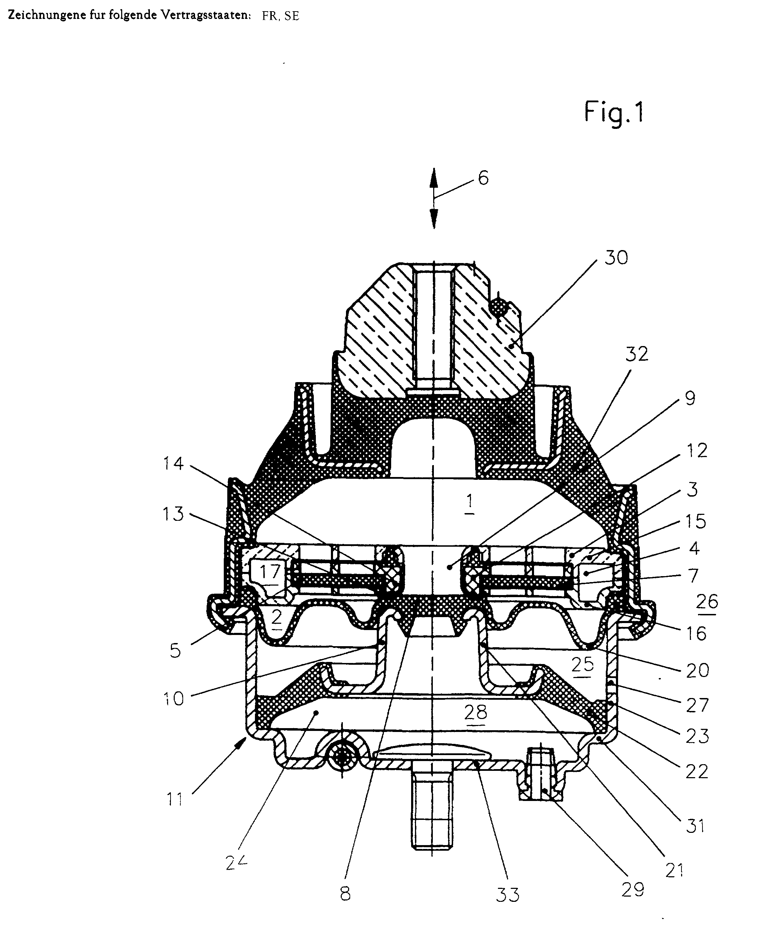

Die Trennwand ist in axialer Richtung zweiteilig ausgeführt und bildet einen Düsenkäfig, wobei innerhalb des Düsenkäfigs eine Membran aus elastomerem Werkstoff angeordnet ist, die kreisringförmig ausgebildet ist und eine der Durchbrechung entsprechende zentrale Ausnehmung aufweist. In den Ausführungsbeispielen Figuren 1 bis 4 ist die Membran lose innerhalb der Trennwand angeordnet und bei geschlossener Durchbrechung zur effizienten Isolierung höherfrequenter, kleinamplitudiger Schwingungen in axialer Richtung hin- und herbewegbar.

Zur Tilgung von Schwingungen im Leerlauf einer angeschlossenen Verbrennungskraftmaschine wird der Wulst aus der Durchbrechung entfernt, so dass sich die Flüssigkeitssäule innerhalb der Durchbrechung phasenverschoben zu den leerlaufbedingt eingeleiteten Schwingungen bewegt. Auch in diesem Betriebszustand ist die Membran lose innerhalb des Düsenkäfigs angeordnet, was im Hinblick auf eine effiziente Schwingungstilgung leerlaufbedingter Schwingungen wenig zufriedenstellend ist.

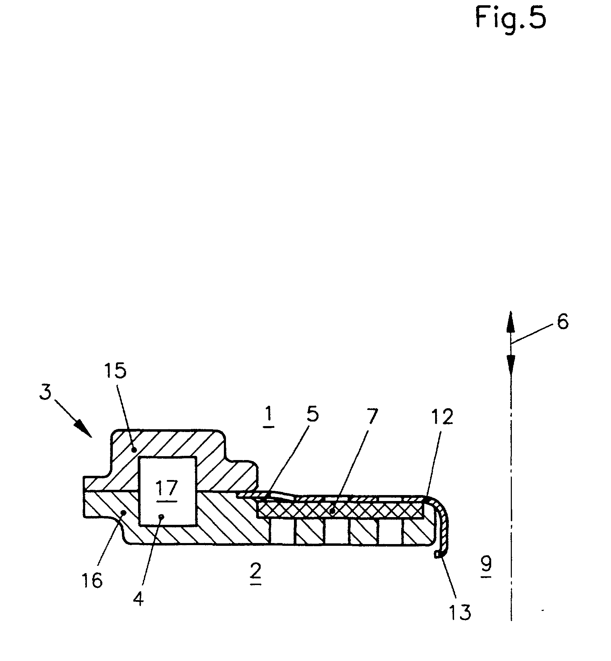

In den Ausführungsbeispielen Figuren 5 bis 7 ist die Membran innerhalb des Düsenkäfigs eingespannt, wodurch die Isolierung höherfrequenter, kleinamplitudiger Schwingungen bei verschlossener Durchbrechung nachteilig beeinflusst wird.

In der EP-A-840 035, die einen Stand der Technik gemäß Artikel 54(3) und (4) EPÜ bildet, ist ein hydraulisch dämpfendes Lager mit einem Arbeitsraum und einem Ausgleichsraum offenbart, wobei zwischen dem Arbeitsraum und dem Ausgleichsraum eine Trennwand angeordnet ist, umfassend zumindest eine Durchtrittsöffnung zur Dämpfung tieffrequenter, großamplitudiger Schwingungen und eine in einer Ausnehmung in Richtung der eingeleiteten Schwingungen hin- und herbewegbare Membran zur Isolierung hochfrequenter, kleinamplitudiger Schwingungen sowie eine durch einen Dichtkörper verschließbare Durchbrechung, die durch ein Stellelement einer Stellvorrichtung in Offenstellung bringbar ist, wobei die Membran durch die Stellvorrichtung bei Öffnung der Durchbrechung flüssigkeitsdicht innerhalb der Ausnehmung arretierbar ist.

### Darstellung der Erfindung

Der Erfindung liegt die Aufgabe zugrunde, ein Lager der vorbekannten Art derart weiterzuentwickeln, dass einerseits die Schwingungstilgung leerlaufbedingter Schwingungen und andererseits die Isolierung höherfrequenter Schwingungen in einem Drehzahlbereich oberhalb der Leerlaufdrehzahl verbessert wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die Membran durch die Stellvorrichtung bei Öffnung der Durchbrechung flüssigkeitsdicht innerhalb der Ausnehmung arretierbar ist. In der Ausnehmung ist ein elastisch nachgiebiges Spannelement angeordnet, das die Membran bei offener Durchbrechung unter elastischer Vorspannung anliegend berührt, wobei das Spannelement der Membran bei verschlossener Durchbrechung mit allseitigem Abstand benachbart zugeordnet ist. Der Aufbau und/oder die Herstellung des beanspruchten Lagers ist nicht aufwendiger, als beim Lager aus dem Stand der Technik, da die Arretierung/ Freigabe der Membran automatisch bei Betätigung der Stellvorrichtung erfolgt. Bei ist der Erfindung von Vorteil, dass das erfindungsgemäße Lager durch die flüssigkeitsdichte Arretierung der Membran innerhalb der Ausnehmung bei offener Durchbrechung eine gute Tilgerwirkung von Schwingungen aufweist, die durch eine auf dem Lager abgestützte Verbrennungskraftmaschine während des Leerlaufs in das Lager eingeleitet werden. Ein Überströmen von Dämpfungsflüssigkeit aus dem Arbeitsraum in den Ausgleichsraum und wieder zurück findet im wesentlichen durch die Durchbrechung statt.

Während des Betriebs der Verbrennungskraftmaschine oberhalb der Leerlaufdrehzahl wird die Durchbrechung durch den Dichtkörper verschlossen und die flüssigkeitsdichte Arretierung der Membran innerhalb der Trennwand aufgehoben. In diesem Betriebszustand funktioniert das erfindungsgemäße Lager wie allgemein bekannte hydraulisch dämpfende Lager, bei denen zur Isolierung höherfrequenter, kleinamplitudiger, motorerregter Schwingungen, die Membran lose hin- und herbeweglich innerhalb der Trennwand angeordnet ist. Zur Dämpfung tieffrequenter, großamplitudiger, fahrbahnerregter Schwingungen, schwingt die innerhalb der Durchtrittsöffnung befindliche Dämpfungsflüssigkeit phasenverschoben hin- und her; die tieffrequenten, großamplitudigen Schwingungen werden dadurch gedämpft.

Nach einer vorteilhaften Ausgestaltung ist die Membran lose innerhalb der Ausnehmung angeordnet und bedingt dadurch eine gute Isolierung höherfrequenter Schwingungen, wobei die lose angeordnete Membran durch die Stellvorrichtung bei Öffnung der Durchbrechung flüssigkeitsdicht innerhalb der Ausnehmung arretierbar ist.

Das erfindungsgemäße Lager weist durch die schaltbare Membran stets ausgezeichnete Gebrauchseigenschaften auf.

Gemäß einer vorteilhaften Ausgestaltung kann es vorgesehen sein, dass das Spannelement als Dichtsitz für den Dichtkörper ausgebildet und dichtend mit diesem in Eingriff bringbar ist. Das Lager weist dadurch einen vergleichsweise teilearmen, einfachen Aufbau auf, was in fertigungstechnischer und wirtschaftlicher Hinsicht von hervorzuhebendem Vorteil ist.

Gemäß einer ersten Ausgestaltung kann das Spannelement aus elastomerem Werkstoff bestehen. Schiefstellungen des Dichtkörpers zum Dichtsitz und/oder Fertigungstoleranzen des Dichtkörpers und/oder Dichtsitzes wirken sich dadurch nicht nachteilig auf das Betriebsverhalten des Lagers aus, da eine sichere Abdichtung der Durchbrechung stets gewährleistet ist.

Bedarfsweise kann das Spannelement mit einer Armierung versehen sein. Hierbei ist von Vorteil, daß das Spannelement nahezu keine Relaxationserscheinungen aufweist. Die Durchbrechung des Lagers ist während der überwiegenden Gebrauchsdauer durch den Dichtkörper verschlossen. Das Lager weist bei Verwendung einer Armierung innerhalb des elastomeren Werkstoffs gleichbleibend gute Gebrauchseigenschaften während einer sehr langen Gebrauchsdauer auf.

Nach einer anderen Ausgestaltung besteht die Möglichkeit, daß das Spannelement aus einem Federstahl besteht. Um eine sichere Abdichtung zu erzielen, muß der mit dem Federstahl in Berührung bringbare Dichtkörper aus einem elastomeren Dichtungswerkstoff bestehen. Das aus dem Federstahl bestehende Spannelement weist während der gesamten Gebrauchsdauer des Lagers stets gleichbleibende Gebrauchseigenschaften auf, da eine Relaxation ausgeschlossen ist.

Die Trennwand ist in axialer Richtung bevorzugt zweiteilig ausgebildet und besteht aus zwei Düsenscheiben. Die beiden Düsenscheiben bilden den Düsenkäfig, in dem die Membran in Abhängigkeit von der Stellung des Spannelements lose oder flüssigkeitsdicht eingespannt angeordnet ist. Auch das Spannelement ist bevorzugt zwischen den Düsenscheiben angeordnet.

Zur Erzielung einer guten Dämpfung tieffrequenter, großamplitudiger Schwingungen ist die Durchtrittsöffnung bevorzugt als Dämpfungskanal ausgebildet, wobei der Dämpfungskanal durch die beiden Düsenscheiben begrenzt ist. Die Dimensionierung des Dämpfungskanals ist abhängig von der Frequenz und der Größe der Schwingungsamplituden und stellt für den mit der Konstruktion von Lagern betrauten Fachmann keine Schwierigkeiten dar.

Gemäß einer ersten Ausgestaltung besteht die Möglichkeit, daß der Dämpfungskanal die Membran außenumfangsseitig umschließt. Hierbei ist von Vorteil, daß der Dämpfungskanal durch die Anordnung im umfangsseitigen Randbereich der Trennwand eine große Länge aufweist und daher zur Dämpfung tieffrequenter, großamplitudiger Schwingungen gut geeignet ist.

Nach einer anderen Ausgestaltung besteht die Möglichkeit, daß der Dämpfungskanal von der Membran außenumfangsseitig umschlossen ist, daß der Dämpfungskanal durch zwei ineinander übergehende Teilkanäle gebildet ist, von denen einer im Arbeitsraum und einer im Ausgleichsraum angeordnet ist und daß die Teilkanäle auf ihren einander axial zugewandten Seiten durch das Spannelement getrennt sind. Im Vergleich zu der zuvor beschriebenen Ausführungsform ist hier von Vorteil, daß durch die doppelstöckige Ausgestaltung des Dämpfungskanals trotz kleineren Durchmessers die gleiche Länge erzielt werden kann, wie bei dem zuvor beschriebenen Dämpfungskanal, wobei die für eine gute Schwingungsisolierung höherfrequenter, kleinamplitudiger Schwingungen erforderliche Offenfläche im Vergleich zu dem zuvor beschriebenen Beispiel deutlich vergrößert ist. Durch eine derartige Ausgestaltung wird ein späterer Anstieg der hochfrequenten dynamischen Federrate bewirkt. Die Herstellbarkeit eines solchen Dämpfungskanals ist einfach, da die Teilkanäle im wesentlichen nutförmig ausgebildet und auf den einander zugewandten Seiten offen sind, wobei die räumliche Trennung ausschließlich durch das axial zwischen den Dämpfungskanälen angeordnete Spannelement erfolgt.

Der Ausgleichsraum ist auf der der Trennwand abgewandten Seite bevorzugt durch eine im wesentliche drucklos volumenaufnehmende Rollmembran begrenzt, die einstückig ineinander übergehend und materialeinheitlich mit dem Dichtkörper ausgebildet ist. Durch den teilearmen Aufbau wird eine einfache Herstellung des erfindungsgemäßen Lagers erzielt. Außerdem ist durch die einstückige Ausgestaltung zwischen der Rollmembran und dem Dichtkörper keine seperat hergestellte und montierte Dichtung erforderlich.

Der Dichtkörper kann in die in Richtung des Ausgleichsraums offene Stirnseite eines im wesentlichen hohlzylinderförmigen Kolbens dichtend eingeschnappt sein, der das Stellelement bildet. Die dichte Verbindung zwischen dem Dichtkörper und dem Kolben ist erforderlich, um einen Strömungskurzschluß des Steuermediums und daraus resultierende nachteilige Gebrauchseigenschaften bei der Schaltbarkeit des Lagers zu vermeiden.

Der Kolben kann auf der dem Ausgleichsraum abgewandten Stirnseite dichtend mit einer Schaltfeder verbunden sein, die ortsfest und dichtend im Gehäuse abgestützt ist. Die Schaltfeder ist dabei derart gestaltet und angeordnet, daß sie den Dichtkörper im nichtgeschalteten Zustand des Lagers mit dem Dichtsitz in Eingriff bringt, das Spannelement von der Membran abhebt und dadurch für eine lose Anordnung der Membran innerhalb des Düsenkäfigs sorgt. Die Schaltfeder besteht bevorzugt aus einem elastomeren Werkstoff und ist zweckmäßig mit der dem Ausgleichsraum abgewandten Stirnseite des Kolbens vulkanisiert.

Das Gehäuse ist auf der dem Ausgleichsraum abgewandten Seite der Rollmembran als Steuerdruckdose ausgebildet, wobei die Stellvorrichtung durch ein Druckmittel betätigbar ist. Der axial zwischen der Rollmembran und der Schaltfeder angeordnete erste Hohlraum weist bevorzugt zumindest eine zur Atmosphäre offene Entlüftungsöffnung auf, wobei auf der dem ersten Hohlraum abgewandten Seite der Schaltfeder ein zweiter Hohlraum angeordnet ist, der einen Pneumatikanschluß aufweist und mit einem Vakuum beaufschlagbar ist. Eine Beaufschlagung der Steuerdruckdose mit Unterdruck kann insbesondere bei Kraftfahrzeugen mit Otto-Motoren von Vorteil sein, da der Unterdruck zur Betätigung des Lagers aus dem Saugrohr bzw. einem daran angeschlossenen Druckspeicher zumeist problemlos verfügbar ist. Die zuvor beschriebene Ausgestaltung ist außerdem deshalb vorteilhaft, weil bei einem Ausfall der Steuervorrichtung die Durchbrechung durch die Schaltfeder automatisch verschlossen wird. Lediglich im Bereich des Leerlaufs der angeschlossenen Verbrennungskraftmaschine ergeben sich in diesem Fall unerwünschte Schwingungen, die jedoch die Sicherheit keinesfalls nachteilig beeinflussen.

### Kurzbeschreibung der Zeichnungen

Das erfindungsgemäße Lager wird nachfolgend anhand der Zeichnungen weiter verdeutlicht. Diese zeigen:
- in Figur 1: ein erstes Ausführungsbeispiel eines erfindungsgemäßen, hydraulisch dämpfenden Lagers in quergeschnittener Darstellung,
- in Figur 2: einen Ausschnitt aus dem Lager gemäß Figur 1, bei dem die Durchbrechung offen ist,
- in Figur 3: einen Ausschnitt aus dem Lager gemäß Figur 1, bei dem die Durchbrechung verschlossen ist,
- in Figur 4: ein zweites Ausführungsbeispiel, mit einer abweichend gestalteten Trennwand.

### Ausführung der Erfindung

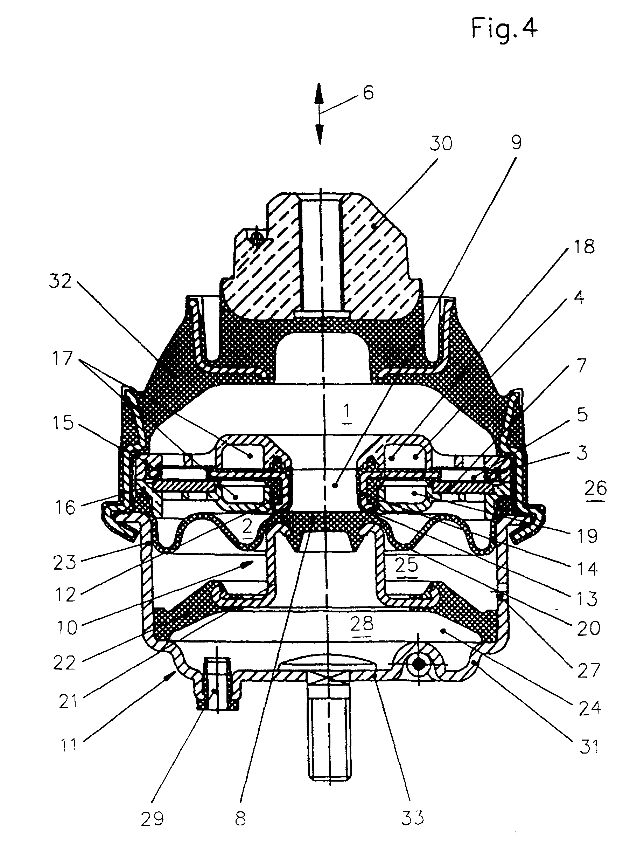

In den Figuren 1 und 4 sind zwei Ausführungsbeispiele des erfindungsgemäßen, hydraulisch dämpfenden Lagers gezeigt, die sich durch die Ausgestaltung ihrer Trennwände voneinander unterscheiden. Jedes der Lager ist mit Dämpfungsflüssigkeit gefüllt und umfasst ein Traglager 30 und ein Auflager 31, die durch einen im wesentlichen kegelstumpfförmigen Federkörper 32 aus elastomerem Werkstoff miteinander verbunden sind. Innerhalb des Lagers ist ein Arbeitsraum 1 angeordnet, der durch das Traglager 30, den Federkörper 32 und die Trennwand 3 begrenzt ist. Auf der dem Arbeitsraum 1 abgewandten Seite der Trennwand 3 ist der Ausgleichsraum 2 angeordnet, der durch die Trennwand 3 und die Rollmembran 20 begrenzt ist, wobei die Rollmembran aus elastomerem Werkstoff besteht und geeignet ist, das bei Einfederung des Federkörpers 32 aus dem Arbeitsraum 1 verdrängte Flüssigkeitsvolumen im Ausgleichsraum 2 aufzunehmen, ohne dass sich eine nennenswerte Druckerhöhung im Ausgleichsraum 2 ergibt.

Auf der dem Ausgleichsraum 2 abgewandten Seite der Rollmembran 20 ist die Stellvorrichtung 11 angeordnet, die aus einer Steuerdruckdose 24 besteht, in der das Stellelement 10 angeordnet ist. Das Stellelement 10 ist in diesen Ausführungsbeispielen als Kolben 21 ausgebildet und auf der dem Ausgleichsraum abgewandten Stirnseite mit einer Schaltfeder aus elastomerem Werkstoff verbunden, die innerhalb des Gehäuses 23 abgestützt ist.

Die Steuerdruckdose 24 umfaßt einen ersten Hohlraum 25 axial zwischen der Rollmembran 20 und der Schaltfeder 22, wobei der erste Hohlraum in diesen Ausführungsbeispielen eine zur Atmosphäre 26 offene Entlüftungsöffnung 27 aufweist. Außerdem ist innerhalb der Steuerdruckdose 24 zwischen der Schaltfeder 22 und dem Gehäuseboden 33 ein zweiter Hohlraum 28 angeordnet, der einen Pneumatikanschluß 29 zur Unterdruckbeaufschlagung aufweist. Die beiden Hohlräume 25, 28 sind gegeneinander abgedichtet.

Das erfindungsgemäße Lager kann beispielsweise zur Abstützung einer Verbrennungskraftmaschine in einem Kraftfahrzeug zur Anwendung gelangen.

In Figur 1 besteht die Trennwand 3 aus einer oberen 15 und einer unteren Düsenscheibe 16, die jeweils gitterförmig ausgebildet sind und eine Ausnehmung 5 begrenzen in der die Membran 7 aus elastomerem Werkstoff angeordnet ist. Die Beweglichkeit der Membran 7 ist abhängig vom Schaltzustand des Lagers, wobei die Membran 7 immer so geschaltet ist, daß sie bei offener Durchbrechung 9 flüssigkeitsdicht innerhalb der Ausnehmung 5 arretiert und bei geschlossener Durchbrechung 9 als Lose zwischen den Düsenscheiben 15, 16 frei hin- und herbeweglich ist.

Der Kolben 21 der Stellvorrichtung 11 wirkt beim Schließen der Durchbrechung 9 auf das Spannelement 12, das die Membran 7 unter elastischer Vorspannung dichtend innerhalb der Ausnehmung 5 gehalten hat. Die Schließkraft der Stellvorrichtung ist immer größer, als die Federkraft des Spannelements, so daß das Spannelement bei Schließen der Durchbrechung 9 elastisch verformt wird und die Membran 7 nicht mehr anliegend berührt.

In dem hier gezeigten Ausführungsbeispiel ist das Spannelement 12 mit einer Armierung 14 versehen, um Relaxationserscheinungen auf ein Minimum zu begrenzen und dadurch gleichbleibend gute Gebrauchseigenschaften während einer langen Gebrauchsdauer zu erreichen.

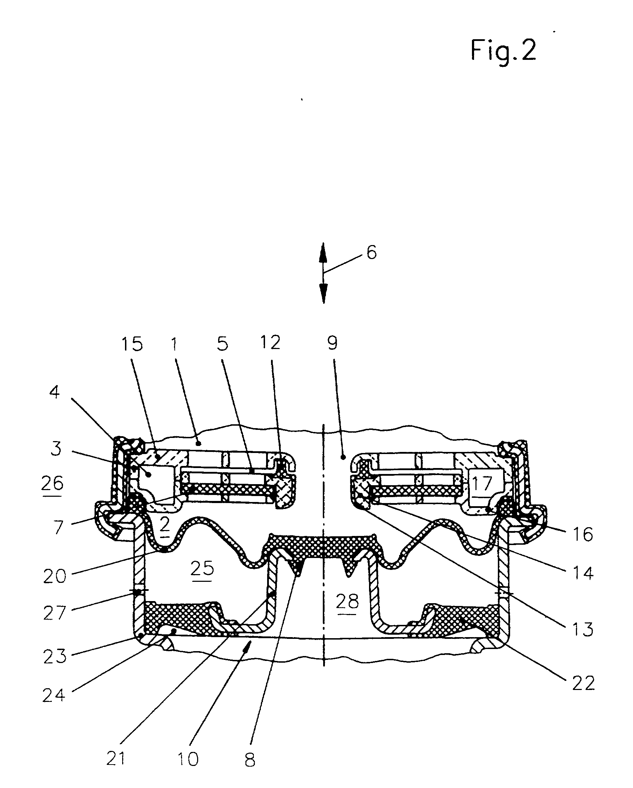

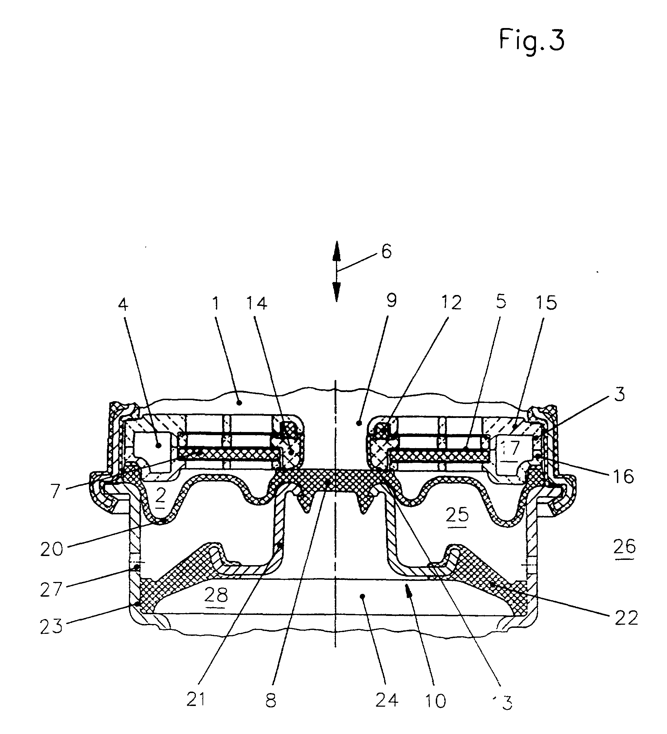

Die Funktion des erfindungsgemäßen Lagers wird nachfolgen anhand der Figuren 2 und 3 näher erläutert.

In Figur 2 ist das Lager während des Leerlaufs der abgestützten Verbrennungskraftmaschine gezeigt. Der Dichtkörper 8, der auf der dem Arbeitsraum 1 zugewandten Seite des Kolbens 21 dichtend befestigt ist, ist mit axialem Abstand benachbart zum Dichtsitz 13 angeordnet, der durch das Spannelement 12 gebildet ist. Das Spannelement 12 ist an der oberen Düsenscheibe 15 abgestützt und drückt die Membran 7 auf die untere Düsenscheibe 16. Die Flüssigkeit im Bereich der zentralen Durchbrechung 9 wirkt als Tilgermasse und schwingt gegenphasig zu den leerlaufbedingt eingeleiteten Schwingungen. Eine Flüssigkeitsverlagerung vom Arbeitsraum 1 in den Ausgleichsraum 2 durch den Dämpfungskanal 17 und/oder durch die Düsenscheiben 15, 16 an der Membran 7 vorbei in den Ausgleichsraum 2 findet im wesentlichen nicht statt.

Die Unterdruckbeaufschlagung des zweiten Hohlraums 28 erfolgt beispielsweise durch den vergleichsweise großen Unterdruck im Saugrohr der Verbrennungskraftmaschine im Leerlauf, wobei der Unterdruck gegen die Federkraft der Schaltfeder 22 wirkt.

In Figur 3 ist der Betriebszustand des Lagers gezeigt, wenn die abgestützte Verbrennungskraftmaschine oberhalb der Leerlaufdrehzahl betrieben wird. Die Unterdruckbeaufschlagung des zweiten Hohlraums 28 ist abgeschaltet und die Schaltfeder 22 bewegt den Kolben 21 in Richtung der Trennwand 3, bis der mit dem Kolben verbundene Dichtkörper 8 das als Dichtsitz 13 ausgebildete Spannelement 12 unter elastischer Vorspannung dichtend berührt. Dadurch, daß die Federkraft der Schaltfeder 24 größer ist, als die Federkraft des Spannelements 12, wird das Spannelement 12 axial in Richtung des Arbeitsraums 1 verlagert , so daß sich die Membran 7 zur Isolierung höherfrequenter, kleinamplitudiger Schwingungen innerhalb der Ausnehmung 5 lose hin- und herbewegen kann.

Die Dämpfung tieffrequenter, großamplitudiger Schwingungen erfolgt demgegenüber durch eine Flüssigkeitsverlagerung innerhalb des Dämpfungskanals 17.

In Figur 4 ist ein zweites Ausführungsbeispiel eines Lagers gezeigt, das sich vom zuvor beschriebenen ersten Ausführungsbeispiel nur durch eine abweichend gestaltete Trennwand 3 unterscheidet.

Im Gegensatz zum zuvor beschriebenen ersten Ausführungsbeispiel besteht der Dämpfungskanal 17 aus einem oberen 18 und einem unteren Teilkanal 19, die flüssigkeitsleitend miteinander verbunden sind, wobei der obere Teilkanal 18 in den Arbeitsraum 1 und der untere Teilkanal 19 in den Ausgleichsraum 2 mündet. Der Dämpfungskanal 17 ist radial außenseitig von der Membran 7 umschlossen. Im Vergleich zum zuvor beschriebenen Ausführungsbeispiel weist die hier gezeigt Membran 7 eine deutlich vergrößerte Offenfläche auf. Die Dämpfung ist in beiden Ausführungsbeispielen durch eine übereinstimmende Dimensionierung der Dämpfungskanäle 17 gleich gut, während bei dem in Figur 4 gezeigten Ausführungsbeispiel die dynamische Federrate erst bei vergleichsweise höheren Frequenzen ansteigt. Dadurch ist die Isolierung höherfrequenter Schwingungen verbessert.

Die Teilkanäle 18, 19 sind in axialer Richtung durch das Spannelement 12 getrennt, wobei die beiden Teilkanäle 18, 19 stets relativ ortsfest zueinander angeordnet sind. Nur das außenseitig gummierte Spannelement bewegt sich relativ zu den Teilkanälen 18, 19 in axialer Richtung, um die Membran 7, wie hier dargestellt, bei Drehzahlen oberhalb der Leerlaufdrehzahl freizugeben.

### Beschreibung für folgende Vertragsstaaten : FR, SE

### Technisches Gebiet

Die Erfindung betrifft ein hydraulisch dämpfendes Lager mit einem Arbeitsraum und einem Ausgleichsraum, wobei zwischen dem Arbeitsraum und dem Ausgleichsraum eine Trennwand angeordnet ist, umfassend zumindest eine Durchtrittsöffnung zur Dämpfung tieffrequenter, großamplitudiger Schwingungen und eine in einer Ausnehmung in Richtung der eingeleiteten Schwingungen hin- und herbewegbare Membran zur Isolierung hochfrequenter, kleinamplitudiger Schwingungen sowie eine durch einen Dichtkörper verschließbare Durchbrechung, die durch ein Stellelement einer Stellvorrichtung in Offenstellung bringbar ist.

### Stand der Technik

Ein solches Lager ist aus der EP 0 547 287 A1 bekannt. Das vorbekannt Lager ist als Hydrolager ausgebildet, wobei die zentral innerhalb der Trennwand angeordnete Durchbrechung durch einen stopfenartigen Wulst verschließbar ist.

Die Trennwand ist in axialer Richtung zweiteilig ausgeführt und bildet einen Düsenkäfig, wobei innerhalb des Düsenkäfigs eine Membran aus elastomerem Werkstoff angeordnet ist, die kreisringförmig ausgebildet ist und eine der Durchbrechung entsprechende zentrale Ausnehmung aufweist. In den Ausführungsbeispielen Figuren 1 bis 4 ist die Membran lose innerhalb der Trennwand angeordnet und bei geschlossener Durchbrechung zur effizienten Isolierung höherfrequenter, kleinamplitudiger Schwingungen in axialer Richtung hin- und herbewegbar.

Zur Tilgung von Schwingungen im Leerlauf einer angeschlossenen Verbrennungskraftmaschine wird der Wulst aus der Durchbrechung entfernt, so daß sich die Flüssigkeitssäule innerhalb der Durchbrechung phasenverschoben zu den leerlaufbedingt eingeleiteten Schwingungen bewegt. Auch in diesem Betriebszustand ist die Membran lose innerhalb des Düsenkäfigs angeordnet, was im Hinblick auf eine effiziente Schwingungstilgung leerlaufbedingter Schwingungen wenig zufriedenstellend ist.

In den Ausführungsbeispielen Figuren 5 bis 7 ist die Membran innerhalb des Düsenkäfigs eingespannt, wodurch die Isolierung höherfrequenter, kleinamplitudiger Schwingungen bei verschlossener Durchbrechung nachteilig beeinflußt wird.

### Darstellung der Erfindung

Der Erfindung liegt die Aufgabe zugrunde, ein Lager der vorbekannten Art derart weiterzuentwickeln, daß einerseits die Schwingungstilgung leerlaufbedingter Schwingungen und andererseits die Isolierung höherfrequenter Schwingungen in einem Drehzahlbereich oberhalb der Leerlaufdrehzahl verbessert wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß die Membran durch die Stellvorrichtung bei Öffnung der Durchbrechung flüssigkeitsdicht innerhalb der Ausnehmung arretierbar ist. Hierbei ist von Vorteil, daß das erfindungsgemäße Lager durch die flüssigkeitsdichte Arretierung der Membran innerhalb der Ausnehmung bei offener Durchbrechung eine gute Tilgerwirkung von Schwingungen aufweist, die durch eine auf dem Lager abgestützte Verbrennungskraftmaschine während des Leerlaufs in das Lager eingeleitet werden. Ein Überströmen von Dämpfungsflüssigkeit aus dem Arbeitsraum in den Ausgleichsraum und wieder zurück findet im wesentlichen durch die Durchbrechung statt.

Während des Betriebs der Verbrennungskraftmaschine oberhalb der Leerlaufdrehzahl wird die Durchbrechung durch den Dichtkörper verschlossen und die flüssigkeitsdichte Arretierung der Membran innerhalb der Trennwand aufgehoben. In diesem Betriebszustand funktioniert das erfindungsgemäße Lager wie allgemein bekannte hydraulisch dämpfende Lager, bei denen zur Isolierung höherfrequenter, kleinamplitudiger, motorerregter Schwingungen, die Membran lose hin- und herbeweglich innerhalb der Trennwand angeordnet ist. Zur Dämpfung tieffrequenter, großamplitudiger, fahrbahnerregter Schwingungen, schwingt die innerhalb der Durchtrittsöffnung befindliche Dämpfungsflüssigkeit phasenverschoben hin- und her; die tieffrequenten, großamplitudigen Schwingungen werden dadurch gedämpft.

Nach einer vorteilhaften Ausgestaltung ist die Membran lose innerhalb der Ausnehmung angeordnet und bedingt dadurch eine gute Isolierung höherfrequenter Schwingungen, wobei die lose angeordnete Membran durch die Stellvorrichtung bei Öffnung der Durchbrechung flüssigkeitsdicht innerhalb der Ausnehmung arretierbar ist

Das erfindungsgemäße Lager weist durch die schaltbare Membran stets ausgezeichnete Gebrauchseigenschaften auf.

Bevorzugt ist in der Ausnehmung ein elastisch nachgiebiges Spannelement angeordnet, das die Membran bei offener Durchbrechung unter elastischer Vorspannung anliegend berührt, wobei das Spannelement der Membran bei verschlossener Durchbrechung mit allseitigem Abstand benachbart zugeordnet ist. Der Aufbau und/oder die Herstellung des beanspruchten Lagers ist nicht aufwendiger, als beim Lager aus dem Stand der Technik, da die Arretierung/Freigabe der Membran automatisch bei Betätigung der Stellvorrichtung erfolgt.

Gemäß einer vorteilhaften Ausgestaltung kann es vorgesehen sein, daß das Spannelement als Dichtsitz für den Dichtkörper ausgebildet und dichtend mit diesem in Eingriff bringbar ist. Das Lager weist dadurch einen vergleichsweise teilearmen, einfachen Aufbau auf, was in fertigungstechnischer und wirtschaftlicher Hinsicht von hervorzuhebendem Vorteil ist.

Gemäß einer ersten Ausgestaltung kann das Spannelement aus elastomerem Werkstoff bestehen. Schiefstellungen des Dichtkörpers zum Dichtsitz und/oder Fertigungstoleranzen des Dichtkörpers und/oder Dichtsitzes wirken sich dadurch nicht nachteilig auf das Betriebsverhalten des Lagers aus, da eine sichere Abdichtung der Durchbrechung stets gewährleistet ist.

Bedarfsweise kann das Spannelement mit einer Armierung versehen sein. Hierbei ist von Vorteil, daß das Spannelement nahezu keine Relaxationserscheinungen aufweist. Die Durchbrechung des Lagers ist während der überwiegenden Gebrauchsdauer durch den Dichtkörper verschlossen. Das Lager weist bei Verwendung einer Armierung innerhalb des elastomeren Werkstoffs gleichbleibend gute Gebrauchseigenschaften während einer sehr langen Gebrauchsdauer auf.

Nach einer anderen Ausgestaltung besteht die Möglichkeit, daß das Spannelement aus einem Federstahl besteht. Um eine sichere Abdichtung zu erzielen, muß der mit dem Federstahl in Berührung bringbare Dichtkörper aus einem elastomeren Dichtungswerkstoff bestehen. Das aus dem Federstahl bestehende Spannelement weist während der gesamten Gebrauchsdauer des Lagers stets gleichbleibende Gebrauchseigenschaften auf, da eine Relaxation ausgeschlossen ist.

Die Trennwand ist in axialer Richtung bevorzugt zweiteilig ausgebildet und besteht aus zwei Düsenscheiben. Die beiden Düsenscheiben bilden den Düsenkäfig, in dem die Membran in Abhängigkeit von der Stellung des Spannelements lose oder flüssigkeitsdicht eingespannt angeordnet ist. Auch das Spannelement ist bevorzugt zwischen den Düsenscheiben angeordnet.

Zur Erzielung einer guten Dämpfung tieffrequenter, großamplitudiger Schwingungen ist die Durchtrittsöffnung bevorzugt als Dämpfungskanal ausgebildet, wobei der Dämpfungskanal durch die beiden Düsenscheiben begrenzt ist. Die Dimensionierung des Dämpfungskanals ist abhängig von der Frequenz und der Größe der Schwingungsamplituden und stellt für den mit der Konstruktion von Lagern betrauten Fachmann keine Schwierigkeiten dar.

Gemäß einer ersten Ausgestaltung besteht die Möglichkeit, daß der Dämpfungskanal die Membran außenumfangsseitig umschließt. Hierbei ist von Vorteil, daß der Dämpfungskanal durch die Anordnung im umfangsseitigen Randbereich der Trennwand eine große Länge aufweist und daher zur Dämpfung tieffrequenter, großamplitudiger Schwingungen gut geeignet ist.

Nach einer anderen Ausgestaltung besteht die Möglichkeit, daß der Dämpfungskanal von der Membran außenumfangsseitig umschlossen ist, daß der Dämpfungskanal durch zwei ineinander übergehende Teilkanäle gebildet ist, von denen einer im Arbeitsraum und einer im Ausgleichsraum angeordnet ist und daß die Teilkanäle auf ihren einander axial zugewandten Seiten durch das Spannelement getrennt sind. Im Vergleich zu der zuvor beschriebenen Ausführungsform ist hier von Vorteil, daß durch die doppelstöckige Ausgestaltung des Dämpfungskanals trotz kleineren Durchmessers die gleiche Länge erzielt werden kann, wie bei dem zuvor beschriebenen Dämpfungskanal, wobei die für eine gute Schwingungsisolierung höherfrequenter, kleinamplitudiger Schwingungen erforderliche Offenfläche im Vergleich zu dem zuvor beschriebenen Beispiel deutlich vergrößert ist. Durch eine derartige Ausgestaltung wird ein späterer Anstieg der hochfrequenten dynamischen Federrate bewirkt. Die Herstellbarkeit eines solchen Dämpfungskanals ist einfach, da die Teilkanäle im wesentlichen nutförmig ausgebildet und auf den einander zugewandten Seiten offen sind, wobei die räumliche Trennung ausschließlich durch das axial zwischen den Dämpfungskanälen angeordnete Spannelement erfolgt.

Der Ausgleichsraum ist auf der der Trennwand abgewandten Seite bevorzugt durch eine im wesentliche drucklos volumenaufnehmende Rollmembran begrenzt, die einstückig ineinander übergehend und materialeinheitlich mit dem Dichtkörper ausgebildet ist. Durch den teilearmen Aufbau wird eine einfache Herstellung des erfindungsgemäßen Lagers erzielt. Außerdem ist durch die einstückige Ausgestaltung zwischen der Rollmembran und dem Dichtkörper keine seperat hergestellte und montierte Dichtung erforderlich.

Der Dichtkörper kann in die in Richtung des Ausgleichsraums offene Stirnseite eines im wesentlichen hohlzylinderförmigen Kolbens dichtend eingeschnappt sein, der das Stellelement bildet. Die dichte Verbindung zwischen dem Dichtkörper und dem Kolben ist erforderlich, um einen Strömungskurzschluß des Steuermediums und daraus resultierende nachteilige Gebrauchseigenschaften bei der Schaltbarkeit des Lagers zu vermeiden.

Der Kolben kann auf der dem Ausgleichsraum abgewandten Stirnseite dichtend mit einer Schaltfeder verbunden sein, die ortsfest und dichtend im Gehäuse abgestützt ist. Die Schaltfeder ist dabei derart gestaltet und angeordnet, daß sie den Dichtkörper im nichtgeschalteten Zustand des Lagers mit dem Dichtsitz in Eingriff bringt, das Spannelement von der Membran abhebt und dadurch für eine lose Anordnung der Membran innerhalb des Düsenkäfigs sorgt. Die Schaltfeder besteht bevorzugt aus einem elastomeren Werkstoff und ist zweckmäßig mit der dem Ausgleichsraum abgewandten Stirnseite des Kolbens vulkanisiert.

Das Gehäuse ist auf der dem Ausgleichsraum abgewandten Seite der Rollmembran als Steuerdruckdose ausgebildet, wobei die Stellvorrichtung durch ein Druckmittel betätigbar ist. Der axial zwischen der Rollmembran und der Schaltfeder angeordnete erste Hohlraum weist bevorzugt zumindest eine zur Atmosphäre offene Entlüftungsöffnung auf, wobei auf der dem ersten Hohlraum abgewandten Seite der Schaltfeder ein zweiter Hohlraum angeordnet ist, der einen Pneumatikanschluß aufweist und mit einem Vakuum beaufschlagbar ist. Eine Beaufschlagung der Steuerdruckdose mit Unterdruck kann insbesondere bei Kraftfahrzeugen mit Otto-Motoren von Vorteil sein, da der Unterdruck zur Betätigung des Lagers aus dem Saugrohr bzw. einem daran angeschlossenen Druckspeicher zumeist problemlos verfügbar ist. Die zuvor beschriebene Ausgestaltung ist außerdem deshalb vorteilhaft, weil bei einem Ausfall der Steuervorrichtung die Durchbrechung durch die Schaltfeder automatisch verschlossen wird. Lediglich im Bereich des Leerlaufs der angeschlossenen Verbrennungskraftmaschine ergeben sich in diesem Fall unerwünschte Schwingungen, die jedoch die Sicherheit keinesfalls nachteilig beeinflussen.

### Kurzbeschreibung der Zeichnungen

Das erfindungsgemäße Lager wird nachfolgend anhand der Zeichnungen weiter verdeutlicht. Diese zeigen:
In Figur 1 ein erstes Ausführungsbeispiel eines erfindungsgemäßen, hydraulisch dämpfenden Lagers in quergeschnittener Darstellung,
in Figur 2 einen Ausschnitt aus dem Lager gemäß Figur 1, bei dem die Durchbrechung offen ist,
in Figur 3 einen Ausschnitt aus dem Lager gemäß Figur 1, bei dem die Durchbrechung verschlossen ist,
in Figur 4 ein zweites Ausführungsbeispiel, mit einer abweichend gestalteten Trennwand,

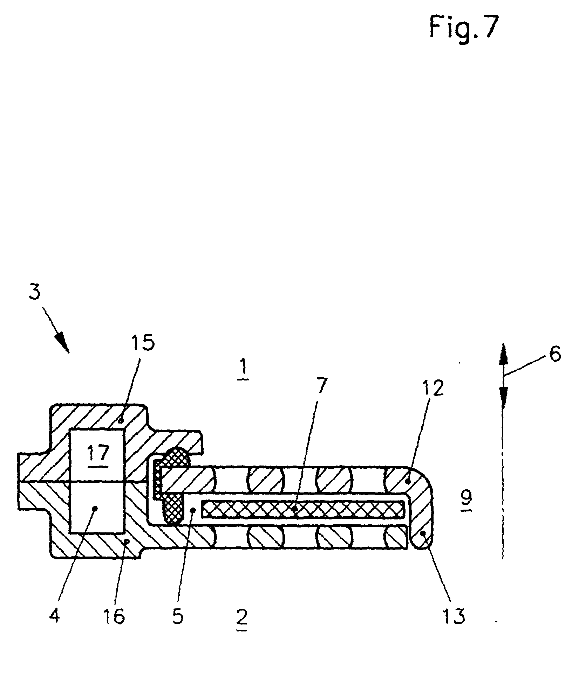

in den Figuren 5 und 7 jeweils einen Ausschnitt aus einer Trennwand mit voneinander abweichenden Spannelementen,

### Ausführung der Erfindung

In den Figuren 1 und 4 sind zwei Ausführungsbeispiele des erfindungsgemäßen, hydraulisch dämpfenden Lagers gezeigt, die sich durch die Ausgestaltung ihrer Trennwände voneinander unterscheiden. Jedes der Lager ist mit Dämpfungsflüssigkeit gefüllt und umfaßt ein Traglager 30 und ein Auflager 31, die durch einen im wesentlichen kegelstumpfförmigen Federkörper 32 aus elastomerem Werkstoff miteinander verbunden sind. Innerhalb des Lagers ist ein Arbeitsraum 1 angeordnet, der durch das Traglager 30, den Federkörper 32 und die Trennwand 3 begrenzt ist. Auf der dem Arbeitsraum 1 abgewandten Seite der Trennwand 3 ist der Ausgleichsraum 2 angeordnet, der durch die Trennwand 3 und die Rollmembran 20 begrenzt ist, wobei die Rollmembran aus elastomerem Werkstoff besteht und geeignet ist, das bei Einfederung des Federkörpers 32 aus dem Arbeitsraum 1 verdrängte Flüssigkeitsvolumen im Ausgleichsraum 2 aufzunehmen, ohne daß sich eine nennenswerte Druckerhöhung im Ausgleichsraum 2 ergibt.

Auf der dem Ausgleichsraum 2 abgewandten Seite der Rollmembran 20 ist die Stellvorrichtung 11 angeordnet, die aus einer Steuerdruckdose 24 besteht, in der das Stellelement 10 angeordnet ist. Das Stellelement 10 ist in diesen Ausführungsbeispielen als Kolben 21 ausgebildet und auf der dem Ausgleichsraum abgewandten Stirnseite mit einer Schaltfeder aus elastomerem Werkstoff verbunden, die innerhalb des Gehäuses 23 abgestützt ist.

Die Steuerdruckdose 24 umfaßt einen ersten Hohlraum 25 axial zwischen der Rollmembran 20 und der Schaltfeder 22, wobei der erste Hohlraum in diesen Ausführungsbeispielen eine zur Atmosphäre 26 offene Entlüftungsöffnung 27 aufweist. Außerdem ist innerhalb der Steuerdruckdose 24 zwischen der Schaltfeder 22 und dem Gehäuseboden 33 ein zweiter Hohlraum 28 angeordnet, der einen Pneumatikanschluß 29 zur Unterdruckbeaufschlagung aufweist. Die beiden Hohlräume 25, 28 sind gegeneinander abgedichtet.

Das erfindungsgemäße Lager kann beispielsweise zur Abstützung einer Verbrennungskraftmaschine in einem Kraftfahrzeug zur Anwendung gelangen.

In Figur 1 besteht die Trennwand 3 aus einer oberen 15 und einer unteren Düsenscheibe 16, die jeweils gitterförmig ausgebildet sind und eine Ausnehmung 5 begrenzen in der die Membran 7 aus elastomerem Werkstoff angeordnet ist. Die Beweglichkeit der Membran 7 ist abhängig vom Schaltzustand des Lagers, wobei die Membran 7 immer so geschaltet ist, daß sie bei offener Durchbrechung 9 flüssigkeitsdicht innerhalb der Ausnehmung 5 arretiert und bei geschlossener Durchbrechung 9 als Lose zwischen den Düsenscheiben 15, 16 frei hin- und herbeweglich ist.

Der Kolben 21 der Stellvorrichtung 11 wirkt beim Schließen der Durchbrechung 9 auf das Spannelement 12, das die Membran 7 unter elastischer Vorspannung dichtend innerhalb der Ausnehmung 5 gehalten hat. Die Schließkraft der Stellvorrichtung ist immer größer, als die Federkraft des Spannelements, so daß das Spannelement bei Schließen der Durchbrechung 9 elastisch verformt wird und die Membran 7 nicht mehr anliegend berührt.

In dem hier gezeigten Ausführungsbeispiel ist das Spannelement 12 mit einer Armierung 14 versehen, um Relaxationserscheinungen auf ein Minimum zu begrenzen und dadurch gleichbleibend gute Gebrauchseigenschaften während einer langen Gebrauchsdauer zu erreichen.

Die Funktion des erfindungsgemäßen Lagers wird nachfolgen anhand der Figuren 2 und 3 näher erläutert.

In Figur 2 ist das Lager während des Leerlaufs der abgestützten Verbrennungskraftmaschine gezeigt. Der Dichtkörper 8, der auf der dem Arbeitsraum 1 zugewandten Seite des Kolbens 21 dichtend befestigt ist, ist mit axialem Abstand benachbart zum Dichtsitz 13 angeordnet, der durch das Spannelement 12 gebildet ist. Das Spannelement 12 ist an der oberen Düsenscheibe 15 abgestützt und drückt die Membran 7 auf die untere Düsenscheibe 16. Die Flüssigkeit im Bereich der zentralen Durchbrechung 9 wirkt als Tilgermasse und schwingt gegenphasig zu den leerlaufbedingt eingeleiteten Schwingungen. Eine Flüssigkeitsverlagerung vom Arbeitsraum 1 in den Ausgleichsraum 2 durch den Dämpfungskanal 17 und/oder durch die Düsenscheiben 15, 16 an der Membran 7 vorbei in den Ausgleichsraum 2 findet im wesentlichen nicht statt.

Die Unterdruckbeaufschlagung des zweiten Hohlraums 28 erfolgt beispielsweise durch den vergleichsweise großen Unterdruck im Saugrohr der Verbrennungskraftmaschine im Leerlauf, wobei der Unterdruck gegen die Federkraft der Schaltfeder 22 wirkt.

In Figur 3 ist der Betriebszustand des Lagers gezeigt, wenn die abgestützte Verbrennungskraftmaschine oberhalb der Leerlaufdrehzahl betrieben wird. Die Unterdruckbeaufschlagung des zweiten Hohlraums 28 ist abgeschaltet und die Schaltfeder 22 bewegt den Kolben 21 in Richtung der Trennwand 3, bis der mit dem Kolben verbundene Dichtkörper 8 das als Dichtsitz 13 ausgebildete Spannelement 12 unter elastischer Vorspannung dichtend berührt. Dadurch, daß die Federkraft der Schaltfeder 24 größer ist, als die Federkraft des Spannelements 12, wird das Spannelement 12 axial in Richtung des Arbeitsraums 1 verlagert , so daß sich die Membran 7 zur Isolierung höherfrequenter, kleinamplitudiger Schwingungen innerhalb der Ausnehmung 5 lose hin- und herbewegen kann.

Die Dämpfung tieffrequenter, großamplitudiger Schwingungen erfolgt demgegenüber durch eine Flüssigkeitsverlagerung innerhalb des Dämpfungskanals 17.

In Figur 4 ist ein zweites Ausführungsbeispiel eines Lagers gezeigt, das sich vom zuvor beschriebenen ersten Ausführungsbeispiel nur durch eine abweichend gestaltete Trennwand 3 unterscheidet.

Im Gegensatz zum zuvor beschriebenen ersten Ausführungsbeispiel besteht der Dämpfungskanal 17 aus einem oberen 18 und einem unteren Teilkanal 19, die flüssigkeitsleitend miteinander verbunden sind, wobei der obere Teilkanal 18 in den Arbeitsraum 1 und der untere Teilkanal 19 in den Ausgleichsraum 2 mündet. Der Dämpfungskanal 17 ist radial außenseitig von der Membran 7 umschlossen. Im Vergleich zum zuvor beschriebenen Ausführungsbeispiel weist die hier gezeigt Membran 7 eine deutlich vergrößerte Offenfläche auf. Die Dämpfung ist in beiden Ausführungsbeispielen durch eine übereinstimmende Dimensionierung der Dämpfungskanäle 17 gleich gut, während bei dem in Figur 4 gezeigten Ausführungsbeispiel die dynamische Federrate erst bei vergleichsweise höheren Frequenzen ansteigt. Dadurch ist die Isolierung höherfrequenter Schwingungen verbessert.

Die Teilkanäle 18, 19 sind in axialer Richtung durch das Spannelement 12 getrennt, wobei die beiden Teilkanäle 18, 19 stets relativ ortsfest zueinander angeordnet sind. Nur das außenseitig gummierte Spannelement bewegt sich relativ zu den Teilkanälen 18, 19 in axialer Richtung, um die Membran 7, wie hier dargestellt, bei Drehzahlen oberhalb der Leerlaufdrehzahl freizugeben.

In Figur 5 ist ein Ausschnitt aus einer weiteren Trennwand 3 gezeigt, bei der das Spannelement 12 durch einen eingespannten Federstahl gebildet ist, der die Membran 7 bei Leerlaufdrehzahl, wie hier dargestellt, auf die gitterförmige untere Düsenscheibe 16 drückt. In diesem Ausführungsbeispiel bildet der Federstahl gleichzeitig die obere Düsenscheibe 15, da er mit gitterförmigen Ausnehmungen versehen ist.

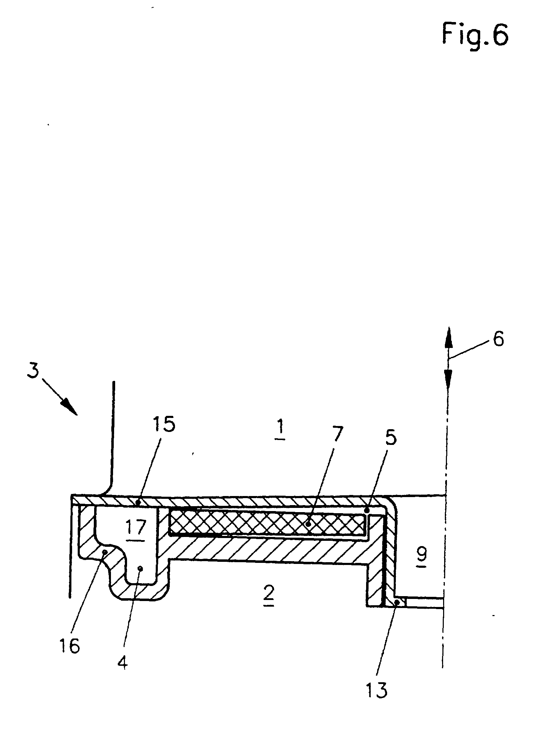

In Figur 6 ist eine Ausführung einer Trennwand 3 gezeigt, die sich vom Ausführungsbeispiel Figur 5 dadurch unterscheidet, daß das Spannelement 12 gleichzeitig die obere Düsenscheibe 15 bildet.

In Figur 7 ist ein weiterer Ausschnitt aus einer Trennwand gezeigt, ähnlich dem Ausführungsbeispiel aus Figur 5, wobei das Spannelement 12 ebenfalls die obere Düsenscheibe 15 bildet und radial außenseitig durch Federelemente aus elastomerem Werkstoff in einer nutförmigen Aufnahme gehalten ist.

## Patentansprüche (Patentansprüche für folgende(n) Vertragsstaat(en): DE, GB, IT)

1. Hydraulisch dämpfendes Lager mit einem Arbeitsraum und einem Ausgleichsraum, wobei zwischen dem Arbeitsraum und dem Ausgleichsraum eine Trennwand angeordnet ist, umfassend zumindest eine Durchtrittsöffnung zur Dämpfung tieffrequenter, großamplitudiger Schwingungen und eine in einer Ausnehmung in Richtung der eingeleiteten Schwingungen hin- und herbewegbaren Membran zur Isolierung hochfrequenter, kleinamplitudiger Schwingungen sowie eine durch einen Dichtkörper verschließbare Durchbrechung, die durch ein Stellelement einer Stellvorrichtung in Offenstellung bringbar ist, **dadurch gekennzeichnet, dass** die Membran (7) durch die Stellvorrichtung (11) bei Öffnung der Durchbrechung (9) flüssigkeitsdicht innerhalb der Ausnehmung (5) arretierbar ist, dass in der Ausnehmung (5) ein elastisch nachgiebiges Spannelement (12) angeordnet ist, das die Membran (7) bei offener Durchbrechung (9) unter elastischer Vorspannung anliegend berührt und dass das Spannelement (12) der Membran (7) bei verschlossener Durchbrechung (9) mit allseitigem Abstand benachbart zugeordnet ist.

2. Lager nach Anspruch 1, **dadurch gekennzeichnet, dass** die Membran (7) lose in der Ausnehmung (5) angeordnet ist.

3. Lager nach einem der Ansprüche 1 oder 2, **dadurch gekennzeichnet, dass** das Spannelement (12) als Dichtsitz (13) für den Dichtkörper (8) ausgebildet und dichtend mit diesem in Eingriff bringbar ist.

4. Lager nach einem der Ansprüche 1 bis 3, **dadurch gekennzeichnet, dass** das Spannelement (12) aus elastomerem Werkstoff besteht.

5. Lager nach Anspruch 4, **dadurch gekennzeichnet, dass** das Spannelement (12) mit einer Armierung (14) versehen ist.

6. Lager nach einem der Ansprüche 1 bis 3, **dadurch gekennzeichnet, dass** das Spannelement (12) aus einem Federstahl besteht.

7. Lager nach einem der Ansprüche 1 bis 6, **dadurch gekennzeichnet, dass** die Trennwand (3) in axialer Richtung zweiteilig ausgebildet ist und aus zwei Düsenscheiben (15, 16) besteht.

8. Lager nach einem der Ansprüche 1 bis 7, **dadurch gekennzeichnet, dass** das Spannelement (12) zwischen den Düsenscheiben (15, 16) angeordnet ist.

9. Lager nach einem der Ansprüche 1 bis 8, **dadurch gekennzeichnet, dass** die Durchtrittsöffnung (4) als Dämpfungskanal (17) ausgebildet ist.

10. Lager nach Anspruch 9, **dadurch gekennzeichnet, dass** der Dämpfungskanal (17) die Membran (7) außenumfangsseitig umschließt.

11. Lager nach Anspruch 9, **dadurch gekennzeichnet, dass** der Dämpfungskanal (17) von der Membran (7) außenumfangsseitig umschlossen ist, dass der Dämpfungskanal (17) durch zwei ineinander übergehende Teilkanäle (18, 19) gebildet ist, von denen einer (18) im Arbeitsraum (1) und einer (19) im Ausgleichsraum (2) angeordnet ist und dass die Teilkanäle (18, 19) auf ihren einander axial zugewandten Seiten durch das Spannelement (12) getrennt sind.

12. Lager nach einem der Ansprüche 1 bis 11, **dadurch gekennzeichnet, dass** der Ausgleichsraum (2) auf der der Trennwand (3) abgewandten Seite durch eine im wesentlichen drucklos volumenaufnehmende Rollmembran (20) begrenzt ist, die einstückig ineinanderübergehend und materialeinheitlich mit dem Dichtkörper (8) ausgebildet ist.

13. Lager nach einem der Ansprüche 1 bis 12, **dadurch gekennzeichnet, dass** der Dichtkörper (8) in die in Richtung des Ausgleichsraums (2) offene Stirnseite eines im wesentlichen hohlzylinderförmigen Kolbens (21) dichtend eingeschnappt ist, der das Stellelement (10) bildet.

14. Lager nach Anspruch 13, **dadurch gekennzeichnet, dass** der Kolben (21) auf der dem Ausgleichsraum (2) abgewandten Stirnseite dichtend mit einer Schaltfeder (22) verbunden ist, die ortsfest und dichtend im Gehäuse (23) abgestützt ist.

15. Lager nach einem der Ansprüche 1 bis 14, **dadurch gekennzeichnet, dass** das Gehäuse (23) auf der dem Ausgleichsraum (2) abgewandten Seite der Rollmembran (20) als Steuerdruckdose ausgebildet ist und dass die Stellvorrichtung (11) durch ein Druckmittel betätigbar ist.

16. Lager nach Anspruch 15, **dadurch gekennzeichnet, dass** der axial zwischen der Rollmembran (20) und der Schaltfeder (229 angeordnete erste Hohlraum (25) zumindest eine zur Atmosphäre (26) offene Entlüftungsöffnung (27) aufweist.

17. Lager nach einem der Ansprüche 15 oder 16, **dadurch gekennzeichnet, dass** auf der dem ersten Hohlraum (25) abgewandten Seite der Schaltfeder (22) ein zweiter Hohlraum (28) angeordnet ist, der einen Pneumatikanschluss (29) aufweist und mit einem Vakuum beaufschlagbar ist.

## Patentansprüche (Patentansprüche für folgende(n) Vertragsstaat(en): FR, SE)

1. Hydraulisch dämpfendes Lager mit einem Arbeitsraum und einem Ausgleichsraum, wobei zwischen dem Arbeitsraum und dem Ausgleichsraum eine Trennwand angeordnet ist, umfassend zumindest eine Durchtrittsöffnung zur Dämpfung tieffrequenter, großamplitudiger Schwingungen und eine in einer Ausnehmung in Richtung der eingeleiteten Schwingungen hin- und herbewegbaren Membran zur Isolierung hochfrequenter, kleinamplitudiger Schwingungen sowie eine durch einen Dichtkörper verschließbare Durchbrechung, die durch ein Stellelement einer Stellvorrichtung in Offenstellung bringbar ist, **dadurch gekennzeichnet, daß** die Membran (7) durch die Stellvorrichtung (11) bei Öffnung der Durchbrechung (9) flüssigkeitsdicht innerhalb der Ausnehmung (5) arretierbar ist.

2. Lager nach Anspruch 1, **dadurch gekennzeichnet, daß** die Membran (7) lose in der Ausnehmung (5) angeordnet ist.

3. Lager nach einem der Ansprüche 1 bis 2, **dadurch gekennzeichnet, daß** in der Ausnehmung (5) ein elastisch nachgiebiges Spannelement (12) angeordnet ist, das die Membran (7) bei offener Durchbrechung (9) unter elastischer Vorspannung anliegend berührt und daß das Spannelement (12) der Membran (7) bei verschlossener Durchbrechung (9) mit allseitigem Abstand benachbart zugeordnet ist.

4. Lager nach Anspruch 3, **dadurch gekennzeichnet, daß** das Spannelement (12) als Dichtsitz (13) für den Dichtkörper (8) ausgebildet und dichtend mit diesem in Eingriff bringbar ist.

5. Lager nach einem der Ansprüche 3 bis 4, **dadurch gekennzeichnet, daß** das Spannelement (12) aus elastomerem Werkstoff besteht.

6. Lager nach Anspruch 5, **dadurch gekennzeichnet, daß** das Spannelement (12) mit einer Armierung (14) versehen ist.

7. Lager nach einem der Ansprüche 3 bis 4, **dadurch gekennzeichnet, daß** das Spannelement (12) aus einem Federstahl besteht.

8. Lager nach einem der Ansprüche 1 bis 7, **dadurch gekennzeichnet, daß** die Trennwand (3) in axialer Richtung zweiteilig ausgebildet ist und aus zwei Düsenscheiben (15, 16) besteht.

9. Lager nach einem der Ansprüche 3 bis 8, **dadurch gekennzeichnet, daß** das Spannelement (12) zwischen den Düsenscheiben (15, 16) angeordnet ist.

10. Lager nach einem der Ansprüche 1 bis 9, **dadurch gekennzeichnet, daß** die Durchtrittsöffnung (4) als Dämpfungskanal (17) ausgebildet ist.

11. Lager nach Anspruch 10, **dadurch gekennzeichnet, daß** der Dämpfungskanal (17) die Membran (7) außenumfangsseitig umschließt.

12. Lager nach Anspruch 10, **dadurch gekennzeichnet, daß** der Dämpfungskanal (17) von der Membran (7) außenumfangsseitig umschlossen ist, daß der Dämpfungskanal (17) durch zwei ineinander übergehende Teilkanäle (18, 19) gebildet ist, von denen einer (18) im Arbeitsraum (1) und einer (19) im Ausgleichsraum (2) angeordnet ist und daß die Teilkanäle (18, 19) auf ihren einander axial zugewandten Seiten durch das Spannelement (12) getrennt sind.

13. Lager nach einem der Ansprüche 1 bis 12, **dadurch gekennzeichnet, daß** der Ausgleichsraum (2) auf der der Trennwand (3) abgewandten Seite durch eine im wesentlichen drucklos volumenaufnehmende Rollmembran (20) begrenzt ist, die einstückig ineinanderübergehend und materialeinheitlich mit dem Dichtkörper (8) ausgebildet ist.

14. Lager nach einem der Ansprüche 1 bis 13, **dadurch gekennzeichnet, daß** der Dichtkörper (8) in die in Richtung des Ausgleichsraums (2) offene Stirnseite eines im wesentlichen hohlzylinderförmigen Kolbens (21) dichtend eingeschnappt ist, der das Stellelement (10) bildet.

15. Lager nach Anspruch 14, **dadurch gekennzeichnet, daß** der Kolben (21) auf der dem Ausgleichsraum (2) abgewandten Stirnseite dichtend mit einer Schaltfeder (22) verbunden ist, die ortsfest und dichtend im Gehäuse (23) abgestützt ist.

16. Lager nach einem der Ansprüche 1 bis 15, **dadurch gekennzeichnet, daß** das Gehäuse (23) auf der dem Ausgleichsraum (2) abgewandten Seite der Rollmembran (20) als Steuerdruckdose ausgebildet ist und daß die Stellvorrichtung (11) durch ein Druckmittel betätigbar ist.

17. Lager nach Anspruch 16, **dadurch gekennzeichnet, daß** der axial zwischen der Rollmembran (20) und der Schaltfeder (229 angeordnete erste Hohlraum (25) zumindest eine zur Atmosphäre (26) offene Entlüftungsöffnung (27) aufweist.

18. Lager nach einem der Ansprüche 16 oder 17, **dadurch gekennzeichnet, daß** auf der dem ersten Hohlraum (25) abgewandten Seite der Schaltfeder (22) ein zweiter Hohlraum (28) angeordnet ist, der einen Pneumatikanschluß (29) aufweist und mit einem Vakuum beaufschlagbar ist.

## Claims (Claims for the following Contracting State(s): DE, GB, IT)

1. A hydraulically damping mount, with a working space and with a compensating space, a partition being arranged between the working space and the compensating space, comprising at least one passage orifice for the damping of low-frequency high-amplitude oscillations and a diaphragm for the insulation of high-frequency low-amplitude oscillations, the said diaphragm being movable back and forth in a recess in the direction of the introduced oscillations, and also a perforation which is closable by means of a sealing body and which can be brought into the open position by means of an actuating element of an actuating device, **characterized in that** the diaphragm (7) can be detained within the recess (5) in a liquid-tight manner by the actuating device (11) during the opening of the perforation (9), **in that** the recess (5) has arranged in it an elastically resilient tension element (12) which, when the perforation (9) is open, touches the diaphragm (7) so as to bear against the latter under elastic pretension, and **in that**, when the perforation (9) is closed, the tension element (12) is assigned to the diaphragm (7) so as to be adjacent to the latter with a clearance on all sides.

2. A mount according to claim 1, **characterized in that** the diaphragm (7) is arranged loosely in the recess (5).

3. A mount according to either one of claims 1 or 2, **characterized in that** the tension element (12) is designed as a sealing seat (13) with a sealing body (8) and can be brought sealingly into engagement with the latter.

4. A mount according to any one of claims 1 to 3, **characterized in that** the tension element (12) consists of elastomeric material.

5. A mount according to claim 4, **characterized in that** the tension element (12) is provided with a reinforcement (14).

6. A mount according to any one of claims 1 to 3, **characterized in that** the tension element (12) comprises spring steel.

7. A mount according to any one of claims 1 to 6, **characterized in that** the partition (3) is designed in two parts in the axial direction and comprises two nozzle discs (15, 16).

8. A mount according to any one of claims 1 to 7, **characterized in that** the tension element (12) is arranged between the nozzle discs (15, 16).

9. A mount according to any one of claims 1 to 8, **characterized in that** the passage orifice (4) is designed as a damping duct (17).

10. A mount according to claim 9, **characterized in that** the damping duct (17) surrounds the diaphragm (7) on the outer circumference.

11. A mount according to claim 9, **characterized in that** the damping duct (17) is surrounded by the diaphragm (7) on the outer circumference, **in that** the damping duct (17) is formed by two part-ducts (18, 19) which merge one into the other and of which one (18) is arranged in the working space (1) and one (19) in the compensating space (2), and **in that** the part-ducts (18, 19) are separated on their sides axially facing one another by the tension element (12).

12. A mount according to any one of claims 1 to 11, **characterized in that** the compensating space (2) is delimited, on the side facing away from the partition (3), by a roll diaphragm (20) which absorbs volume in an essentially pressureless manner and which is produced integrally with the sealing body (8) in terms of material and in such a way that the said roll diaphragm and the said sealing body merge one into the other in one piece.

13. A mount according to any one of claims 1 to 12, **characterized in that** the sealing body (8) is snapped sealingly into the end face, open in the direction of the compensating space (2), of an essentially hollow-cylindrical piston (21) which forms the actuating element (10).

14. A mount according to claim 13, **characterized in that** the piston (21) is connected sealingly, on the end face facing away from the compensating space (2), to a switching spring (22) which is supported fixedly and sealingly in the housing (23).

15. A mount according to any one of claims 1 to 14, **characterized in that** the housing (23) is designed as a control-pressure cell on that side of the roll diaphragm (20) which faces away from the compensating space (2), and **in that** the actuating device (11) can be actuated by a pressure medium.

16. A mount according to claim 15, **characterized in that** a first cavity (25) is arranged axially between the roll diaphragm (20) and the switching spring (22) and has at least one venting orifice (27) open to the atmosphere (26).

17. A mount according to either one of claims 15 or 16, **characterized in that** on that side of the switching spring (22) which faces away from the first cavity (25) is arranged a second cavity (28) which has a pneumatic connection (29) and which can be acted upon by a vacuum.

## Claims (Claims for the following Contracting State(s): FR, SE)

1. A hydraulically damping mount, with a working space and with a compensating space, a partition being arranged between the working space and the compensating space, comprising at least one passage orifice for the damping of low-frequency high-amplitude oscillations and a diaphragm for the insulation of high-frequency low-amplitude oscillations, the said diaphragm being movable back and forth in a recess in the direction of the introduced oscillations, and also a perforation which is closable by means of a sealing body and which can be brought into the open position by means of an actuating element of an actuating device, **characterized in that** the diaphragm (7) can be detained within the recess (5) in a liquid-tight manner by the actuating device (11) during the opening of the perforation (9).

2. A mount according to claim 1, **characterized in that** the diaphragm (7) is arranged loosely in the recess (5).

3. A mount according to either one of claims 1 or 2, **characterized in that** the recess (5) has arranged in it an elastically resilient tension element (12) which, when the perforation (9) is open, touches the diaphragm (7) so as to bear against the latter under elastic pretension, and **in that**, when the perforation (9) is closed, the tension element (12) is assigned to the diaphragm (7) so as to be adjacent to the latter with a clearance on all sides.

4. A mount according to claim 3, **characterized in that** the tension element (12) is designed as a sealing seat (13) with a sealing body (8) and can be brought sealingly into engagement with the latter.

5. A mount according to either one of claims 3 or 4, **characterized in that** the tension element (12) consists of elastomeric material.

6. A mount according to claim 5, **characterized in that** the tension element (12) is provided with a reinforcement (14).

7. A mount according to either one of claims 3 or 4, **characterized in that** the tension element (12) comprises spring steel.

8. A mount according to any one of claims 1 to 7, **characterized in that** the partition (3) is designed in two parts in the axial direction and comprises two nozzle discs (15, 16).

9. A mount according to any one of claims 3 to 8, **characterized in that** the tension element (12) is arranged between the nozzle discs (15, 16).

10. A mount according to any one of claims 1 to 9, **characterized in that** the passage orifice (4) is designed as a damping duct (17).

11. A mount according to claim 10, **characterized in that** the damping duct (17) surrounds the diaphragm (7) on the outer circumference.

12. A mount according to claim 10, **characterized in that** the damping duct (17) is surrounded by the diaphragm (7) on the outer circumference, **in that** the damping duct (17) is formed by two part-ducts (18, 19) which merge one into the other and of which one (18) is arranged in the working space (1) and one (19) in the compensating space (2), and **in that** the part-ducts (18, 19) are separated on their sides axially facing one another by the tension element (12).

13. A mount according to any one of claims 1 to 12, **characterized in that** the compensating space (2) is delimited, on the side facing away from the partition (3), by a roll diaphragm (20) which absorbs volume in an essentially pressureless manner and which is produced integrally with the sealing body (8) in terms of material and in such a way that the said roll diaphragm and the said sealing body merge one into the other in one piece.

14. A mount according to any one of claims 1 to 13, **characterized in that** the sealing body (8) is snapped sealingly into the end face, open in the direction of the compensating space (2), of an essentially hollow-cylindrical piston (21) which forms the actuating element (10).

15. A mount according to claim 14, **characterized in that** the piston (21) is connected sealingly, on the end face facing away from the compensating space (2), to a switching spring (22) which is supported fixedly and sealingly in the housing (23).

16. A mount according to any one of claims 1 to 15, **characterized in that** the housing (23) is designed as a control-pressure cell on that side of the roll diaphragm (20) which faces away from the compensating space (2), and **in that** the actuating device (11) can be actuated by a pressure medium.

17. A mount according to claim 16, **characterized in that** a first cavity (25) is arranged axially between the roll diaphragm (20) and the switching spring (22) and has at least one venting orifice (27) open to the atmosphere (26).

18. A mount according to either one of claims 16 or 17, **characterized in that** on that side of the switching spring (22) which faces away from the first cavity (25) is arranged a second cavity (28) which has a pneumatic connection (29) and which can be acted upon by a vacuum.

## Revendications (Revendications pour l'(les) Etat(s) contractant(s) suivant(s): DE, GB, IT)

1. Support à amortissement hydraulique avec un espace de travail et un espace de compensation, une paroi de séparation étant disposée entre l'espace de travail et l'espace de compensation, comprenant au mois un orifice de passage pour l'amortissement de vibrations à basse fréquence et à grande amplitude et une membrane pouvant être déplacée dans un évidement en faisant un aller et retour en direction des vibrations amorcées pour l'isolation de vibrations à haute fréquence et à faible amplitude et un percement pouvant être fermé par un corps d'étanchéité, qui peut être amené dans la position ouverte par un élément de réglage d'un dispositif de réglage, **caractérisé en ce que** la membrane (7) peut être bloquée par le dispositif de réglage (11), lors de l'ouverture du percement (9), de façon étanche au liquide à l'intérieur de l'évidement (5), **en ce que** dans l'évidement (5) est disposé un élément de serrage (12) élastiquement souple, qui touche la membrane (7) en s'appuyant dessus avec une prétension élastique lorsque le percement (9) est ouvert et **en ce que** l'élément de serrage (12) est attribué à la membrane (7), voisin avec une distance sur tous les côtés lorsque le percement (9) est fermé.

2. Support selon la revendication 1, **caractérisé en ce que** la membrane (7) est disposée de façon libre dans l'évidement (5).

3. Support selon l'une quelconque des revendications 1 ou 2, **caractérisé en ce que** l'élément de serrage (12) est conçu comme siège d'étanchéité (13) pour le corps d'étanchéité (8) et peut être amené en prise avec ce corps de façon étanche.

4. Support selon l'une quelconque des revendications 1 à 3, **caractérisé en ce que** l'élément de serrage (12) est à base de matériau élastomère.

5. Support selon la revendication 4, **caractérisé en ce que** l'élément de serrage (12) est pourvu d'une armature (14).

6. Support selon l'une quelconque des revendications 1 à 3, **caractérisé en ce que** l'élément de serrage (12) est à base d'un acier à ressorts.

7. Support selon l'une quelconque des revendications 1 à 6, **caractérisé en ce que** la paroi de séparation (3) est conçue en deux parties dans le sens axial et comprend deux disques de buses (15, 16).

8. Support selon l'une quelconque des revendications 1 à 7, **caractérisé en ce que** l'élément de serrage (12) est disposé entre les disques de buses (15, 16).

9. Support selon l'une quelconque des revendications 1 à 8, **caractérisé en ce que** l'orifice de passage (4) est conçu comme un canal d'amortissement.

10. Support selon la revendication 9, **caractérisé en ce que** le canal d'amortissement (17) entoure la membrane (7) côté pourtour extérieur.

11. Support selon la revendication 9, **caractérisé en ce que** le canal d'amortissement (17) est entouré par la membrane (7) côté pourtour extérieur, **en ce que** le canal d'amortissement (17) est formé par deux canaux partiels (18, 19) se fondant l'un dans l'autre, dont l'un (18) est disposé dans l'espace de travail (1) et l'autre (19) dans l'espace de compensation (2), et **en ce que** les canaux partiels (18, 19) sont séparés par l'élément de serrage (12) sur leurs côtés tournés axialement l'un vers l'autre.

12. Support selon l'une quelconque des revendications 1 à 11, **caractérisé en ce que** l'espace de compensation (2) est limité sur le côté opposé à la paroi de séparation (3) par une membrane de roulement (20) recevant essentiellement du volume sans pression, qui est conçue d'une seule pièce avec le corps d'étanchéité (8) se fondant l'un dans l'autre et de façon homogène au niveau du matériau.

13. Support selon l'une quelconque des revendications 1 à 12, **caractérisé en ce que** le corps d'étanchéité (8) est emboîté de façon étanche dans le côté avant, ouvert en direction de l'espace de compensation (2), d'un piston (21) sensiblement en forme de cylindre creux, qui forme l'élément de réglage (10).

14. Support selon la revendication 13, **caractérisé en ce que** le piston (21) est relié sur le côté avant, opposé à l'espace de compensation (2), de façon étanche avec un ressort de commutation (22), qui est soutenu de façon fixe et étanche dans le boîtier (23).

15. Support selon l'une quelconque des revendications 1 à 14, **caractérisé en ce que** le boîtier (23) est conçu comme une capsule de pression de commande sur le côté, opposé à l'espace de compensation (2), de la membrane de roulement (20) et **en ce que** le dispositif de réglage (11) peut être actionné par un moyen de pression.

16. Support selon la revendication 15, **caractérisé en ce que** la première cavité (25) disposée axialement entre la membrane de roulement (20) et le ressort de commutation (22) présente au moins un orifice de purge (27) ouvert sur l'atmosphère (26).

17. Support selon l'une quelconque des revendications 15 ou 16, **caractérisé en ce que** sur le côté, opposé à la première cavité (25), du ressort de commutation (22) est disposée une deuxième cavité (28), qui présente un branchement pneumatique (29) et peut être alimentée avec un vide.

## Revendications (Revendications pour l'(les) Etat(s) contractant(s) suivant(s): FR, SE)

1. Support à amortissement hydraulique comportant un espace de travail et un espace de compensation, une paroi de séparation étant disposée entre l'espace de travail et l'espace de compensation, comprenant au moins un orifice de passage pour l'amortissement de vibrations à basse fréquence et à grande amplitude et une membrane pouvant être déplacée dans un évidement en faisant un aller et retour en direction des vibrations amorcées pour l'isolation de vibrations à haute fréquence et à faible amplitude et un percement pouvant être fermé par un corps d'étanchéité, qui peut être amené dans la position ouverte par un élément de réglage d'un dispositif de réglage, **caractérisé en ce que** la membrane (7) peut être bloquée par le dispositif de réglage (11), lors de l'ouverture du percement (9), de façon étanche au liquide à l'intérieur de l'évidement (5).

2. Support selon la revendication 1, **caractérisé en ce que** la membrane (7) est disposée de façon libre dans l'évidement (5).

3. Support selon l'une quelconque des revendications 1 à 2, **caractérisé en ce que** dans l'évidement (5) est disposé un élément de serrage (12) élastiquement souple, qui touche la membrane (7) en s'appuyant dessus avec une prétension élastique lorsque le percement (9) est ouvert et **en ce que** l'élément de serrage (12) est attribué à la membrane (7), voisin avec une distance sur tous les côtés lorsque le percement (9) est fermé.

4. Support selon la revendication 3, **caractérisé en ce que** l'élément de serrage (12) est conçu comme siège d'étanchéité (13) pour le corps d'étanchéité (8) et peut être amené en prise avec ce corps de façon étanche.

5. Support selon l'une quelconque des revendications 3 à 4, **caractérisé en ce que** l'élément de serrage (12) est à base de matériau élastomère.

6. Support selon la revendication 5, **caractérisé en ce que** l'élément de serrage (12) est pourvu d'une armature (14).

7. Support selon l'une quelconque des revendications 3 à 4, **caractérisé en ce que** l'élément de serrage (12) est à base d'un acier à ressorts.

8. Support selon l'une quelconque des revendications 1 à 7, **caractérisé en ce que** la paroi de séparation (3) est conçue en deux parties dans le sens axial et comprend deux disques de buses (15, 16).

9. Support selon l'une quelconque des revendications 3 à 8, **caractérisé en ce que** l'élément de serrage (12) est disposé entre les disques de buses (15, 16).

10. Support selon l'une quelconque des revendications 1 à 9, **caractérisé en ce que** l'orifice de passage (4) est conçu comme un canal d'amortissement (17).

11. Support selon la revendication 10, **caractérisé en ce que** le canal d'amortissement (17) entoure la membrane (7) côté pourtour extérieur.

12. Support selon la revendication 10, **caractérisé en ce que** le canal d'amortissement (17) est entouré par la membrane (7) côté pourtour extérieur, **en ce que** le canal d'amortissement (17) est formé par deux canaux partiels (18, 19) se fondant l'un dans l'autre, dont l'un (18) est disposé dans l'espace de travail (1) et l'autre (19) dans l'espace de compensation (2) et **en ce que** les canaux partiels (18, 19) sont séparés par l'élément de serrage (12) sur leurs côtés tournés axialement l'un vers l'autre.

13. Support selon l'une quelconque des revendications 1 à 12, **caractérisé en ce que** l'espace de compensation (2) est limité sur le côté opposé à la paroi de séparation (3) par une membrane de roulement (20) recevant essentiellement du volume sans pression, qui est conçue d'une seule pièce avec le corps d'étanchéité (8) en se fondant l'un dans l'autre et de façon homogène au niveau du matériau.

14. Support selon l'une quelconque des revendications 1 à 13, **caractérisé en ce que** le corps d'étanchéité (8) est emboîté de façon étanche dans le côté avant, ouvert en direction de l'espace de compensation (2), d'un piston (21) sensiblement en forme de cylindre creux, qui forme l'élément de réglage (10).

15. Support selon la revendication 14, **caractérisé en ce que** le piston (21) est relié sur le côté avant, opposé à l'espace de compensation (2), de façon étanche avec un ressort de commutation (22), qui est soutenu de façon fixe et étanche dans le boîtier (23).

16. Support selon l'une quelconque des revendications 1 à 15, **caractérisé en ce que** le boîtier (23) est conçu comme une capsule de pression de commande sur le côté, opposé à l'espace de compensation (2), de la membrane de roulement (20) et **en ce que** le dispositif de réglage (11) peut être actionné par un moyen de pression.

17. Support selon la revendication 16, **caractérisé en ce que** la première cavité (25) disposée axialement entre la membrane de roulement (20) et le ressort de commutation (22) présente au moins un orifice de purge (27) ouvert sur l'atmosphère (26).

18. Support selon l'une quelconque des revendications 16 ou 17, **caractérisé en ce que** sur le côté, opposé à la première cavité (25), du ressort de commutation (22) est disposée une deuxième cavité (28) qui présente un branchement pneumatique (29) et peut être alimentée avec un vide.
